## Europäisches Patentamt

## European Patent Office

## Office européen des brevets

(19)

(11) Numéro de publication: **0 064 422**
**B1**

(12) # FASCICULE DE BREVET EUROPEEN

(45) Date de publication du fascicule du brevet:
**27.06.84**

(51) Int. Cl.³: **B 60 R 1/06**

(21) Numéro de dépôt: **82400490.7**

(22) Date de dépôt: **18.03.82**

(54) **Dispositif de commande à distance d'un miroir de rétroviseur pour véhicule.**

(30) Priorité: **10.04.81 FR 8204120**

(43) Date de publication de la demande:
**10.11.82 Bulletin 82/45**

(45) Mention de la délivrance du brevet:
**27.06.84 Bulletin 84/26**

(84) Etats contractants désignés:
**DE IT**

(56) Documents cités:
**DE - A - 1 266 159**
**US - A - 4 190 326**

(73) Titulaire: **Manzoni, Stéphane, 1, rue Pasteur,**
**F-39200 Saint-Claude (FR)**

(72) Inventeur: **Manzoni, Stéphane, 1, rue Pasteur,**
**F-39200 Saint-Claude (FR)**

(74) Mandataire: **Moulines, Pierre et al, Cabinet BEAU de**
**LOMENIE 55, rue d'Amsterdam, F-75008 Paris (FR)**

BUNDESDRUCKEREI BERLIN

## Description

La présente invention a pour objet un dispositif de commande à distance d'un miroir de rétroviseur pour véhicule.

Il est connu d'utiliser des rétroviseurs dans lesquels, le miroir, commandé à distance, est monté de façon mobile à l'intérieur de son boîtier, ainsi que les moyens d'articulation et de commande par moteur électrique ou par un organe actionné manuellement.

Toutefois, ces rétroviseurs ne donnent pas entière satisfaction en ce qui concerne la protection intérieure des organes mécaniques contre la poussière et les intempéries.

Par ailleurs on connaît le brevet DE-A1 266 159 qui concerne un dispositif comprenant un organe de support solidaire de la carrosserie du véhicule et s'étendant à l'intérieur du boîtier par une ouverture, ledit organe présentant un premier axe autour duquel est montée pivotante une entretoise sur laquelle est monté pivotant, suivant un deuxième axe perpendiculaire au premier axe le boîtier portant le miroir, un moyen de commande de déplacement disposé suivant le second axe étant prévu entre l'organe de support et l'entretoise et un autre moyen de commande de déplacement étant disposé de façon décalée par rapport au second axe entre l'entretoise et le boîtier.

Dans ce dispositif, le miroir étant assujetti au boîtier et non mobile à l'intérieur de celui-ci on obtient une étanchéité parfaite contre la poussière et les intempéries. Un soufflet de conception très simple assure l'obturation de l'ouverture ménagée dans le boîtier afin de permettre les débattements angulaires de celui-ci.

Cependant dans ce dispositif l'organe de support ne permet pas de maintenir très fermement l'ensemble constitué par le boîtier et le miroir qui présentent des dimensions importantes lorsqu'ils sont destinés à équiper des camions ou des autocars, et il en résulte des vibrations qui sont nuisibles à la vision dans le miroir.

Le dispositif suivant l'invention a pour objet de remédier à cet inconvénient.

Conformément à la présente invention, l'organe de support est constitué d'une barre ou d'un tube en forme de U fixé à ses deux extrémités sur la carrosserie du véhicule et dont la partie centrale que s'étend à l'intérieur du boîtier à travers deux ouvertures ménagées dans celui-ci constitue l'axe vertical XX$_1$ autour duquel est montée pivotante, au moyen de deux demi-colliers, l'entretoise portant le boîtier, lesdits demi-colliers présentant chacun une lumière dans laquelle est engagée l'extrémité d'une goupille solidaire de la partie centrale de la barre ou du tube, ladite entretoise comportant en outre deux tourillons disposés suivant l'axe horizontal YY$_1$ et engagés dans des paliers prévus sur le boîtier.

Le moyen d'articulation orthogonale du mécanisme présente des points d'articulation très écartés avec un rattrapage du jeu de l'axe sur le palier au moyen d'une lame élastique, ce qui procure un ensemble robuste et permet d'éviter les vibrations. De ce fait, cette disposition est particulièrement destinée aux rétroviseurs montés sur les camions et les autocars dans lesquels, le miroir présente de très grandes dimensions.

Par ailleurs, le mécanisme ainsi monté dans le boîtier permet de réaliser une forme de celui-ci présentant une épaisseur relativement faible.

Enfin, un tel rétroviseur peut être monté indifféremment sur la portière ou sur le gousset de portière d'un véhicule.

D'autres caractéristiques et avantages de l'invention seront mieux compris à la lecture de la description qui va suivre d'un mode de réalisation et en se référant aux dessins annexés, sur lesquels:

- la fig. 1 est une vue en élévation d'un mode de réalisation d'un rétroviseur suivant l'invention, notamment pour camions et autocars;
- la fig. 2 est une vue en coupe suivant la ligne II-II de la fig. 1;
- la fig. 3 est une vue en coupe suivant la ligne III-III de la fig. 1;
- la fig. 4 est une vue en coupe suivant la ligne IV-IV de la fig. 1;
- la fig. 5 est une vue en coupe suivant la ligne V-V de la fig. 1;
- les fig. 6, 6a sont des vues en coupe montrant le détail d'un mode de réalisation de paliers;
- la fig. 7 est une vue en coupe longitudinale d'un mode de réalisation d'un moyen de commande de déplacement;
- la fig. 8 est une vue en coupe suivant la ligne VIII-VIII de la fig. 7; et
- la fig. 9 est une vue en coupe suivant la ligne IX-IX de la fig. 7.

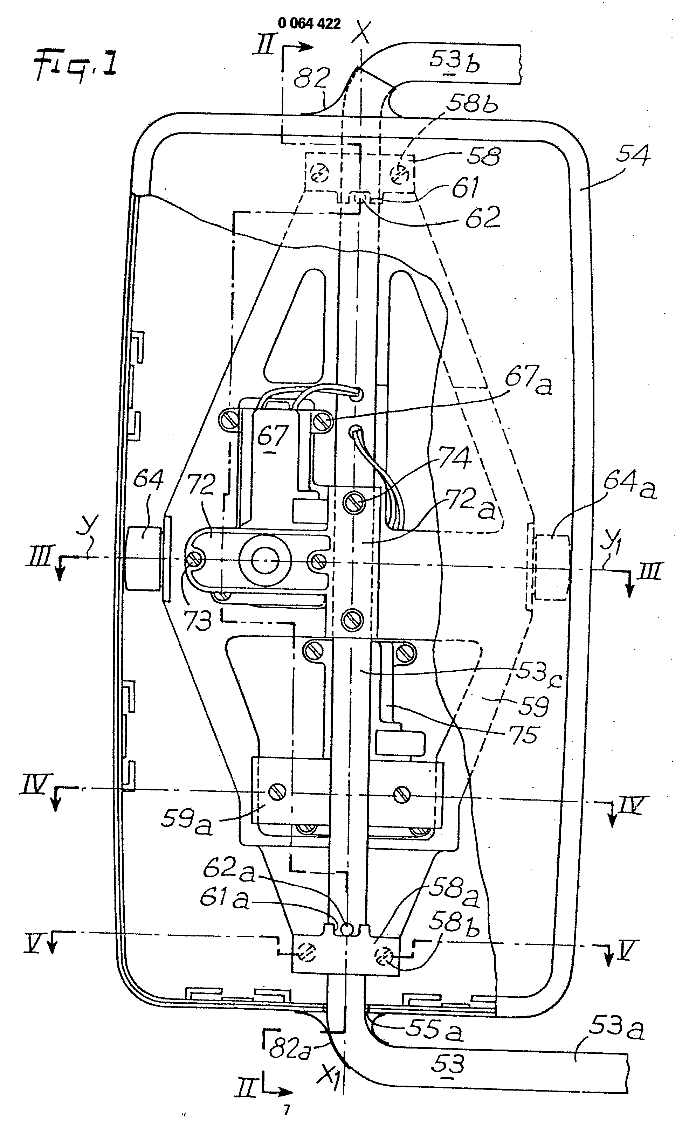

Aux fig. 1 à 5, on a représenté un mode de réalisation du rétroviseur suivant l'invention destinée plus particulièrement aux camions et aux autocars.

Ce rétroviseur comprend un organe de support qui est constitué d'un tube 53 en forme de U fixé à ses deux extrémités 53a, 53b sur la carrosserie d'un véhicule et dont la partie centrale 53c s'étend à l'intérieur du boîtier 54 à travers deux ouvertures 55, 55a ménagées dans celui-ci. Des soufflets 82, 82a en élastomère peuvent être montés sur le tube 53, pour obturer les ouvertures 55 et 55a du boîtier 54 et assurer l'étanchéité. Le boîtier 54 est muni sur sa face avant d'un miroir 56 qui est fixé sur le boîtier au moyen d'un jonc porte miroir 57.

Sur la partie 53c du tube de support s'étend dans à l'intérieur du boîtier une entretoise 59 est montée pivotante, autour d'un axe vertical XX$_1$ au moyen de demicolliers 58, 58a et de vis 58b.

Les demi-colliers 58, 58a d'axe XX$_1$ forment avec l'entretoise 59 des parties annulaires autour du tube 53c dans lesquelles sont montés des éléments intercalaires 60, 60a de friction permettant de régler le serrage sur le tube 53. Les demi-colliers 58, 58a présentent chacun une lumière 61, 61a dans laquelle est engagée l'extrémité d'une goupille 62, 62a solidaire du tube 53c, lesdites goupilles ayant pour but de limiter le déplacement axial et en rotation de l'entretoise 59.

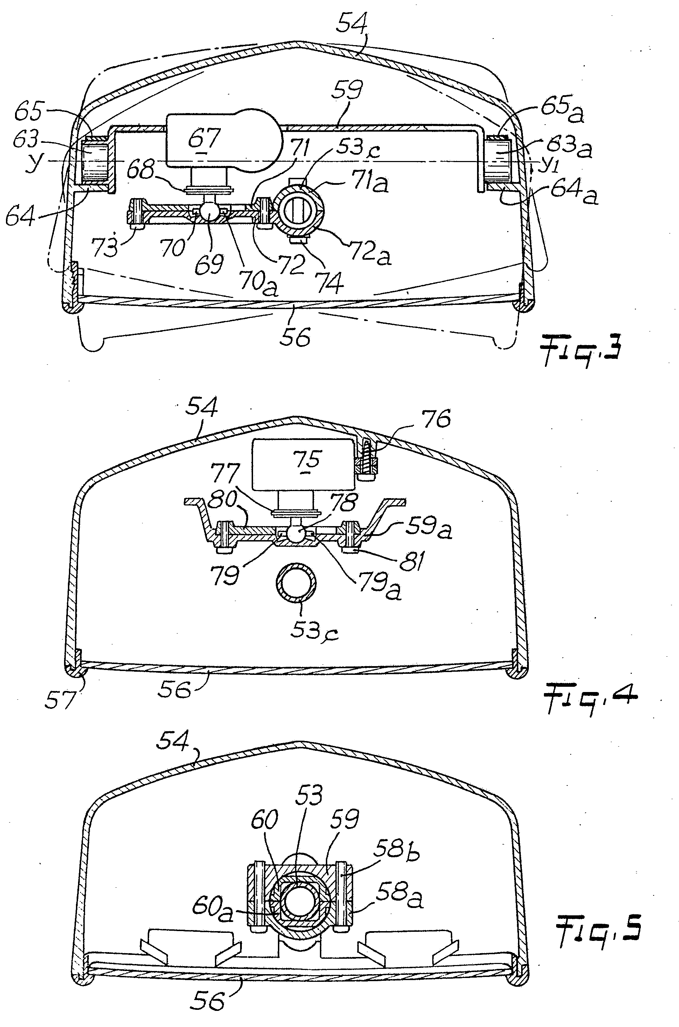

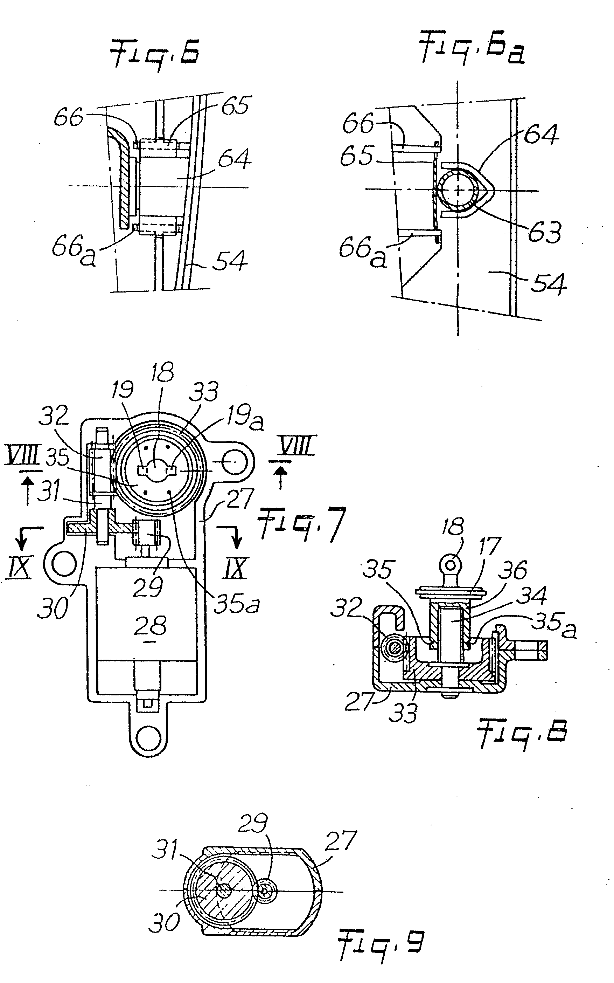

Dans sa partie médiane, l'entretoise 59 présente deux tourillons 63, 63a (fig. 3) qui sont montés pivotants dans les logements 64, 64a, du boîtier ouverts d'un côté (fig. 6, 6a) où ils sont maintenus par une lame élastique 65, notamment en acier, en appui contre des organes de support 66, 66a solidaires du boîtier 54.

De cette manière, le boîtier 54 est monté pivotant sur l'entretoise 59 autour d'un axe horizontal YY$_1$.

Sur l'entretoise 59 est fixé, au moyen de vis 67a, un moyen de commande 67 de déplacement de l'entretoise 59 autour du tube de support 53, ledit moyen de commande étant identique à celui représenté aux fig. 7, 8, 9.

Le moyen de commande 67 comporte une tête mobile 68 coulissant axialement et présentant une rotule 69 munie de deux tétons 70, 70a, ladite rotule étant disposée dans un logement prévu entre deux bras 71, 72 assemblés par des vis 73 et présentant deux demi-colliers 71a, 72a par lesquels ils sont fixés sur le tube 53c au moyen de vis 74.

La rotule 69 est disposée dans un plan horizontal passant par l'axe YY$_1$ et décalée par rapport à l'axe XX$_1$ pour faire pivoter l'entretoise 59 autour de l'axe vertical XX$_1$ et donc autour du tube de support 53.

De la même manière, un moyen de commande 75 du déplacement du boîtier 54 par rapport à l'entretoise 59 est fixé sur le fond du boîtier 54 au moyen de vis 76.

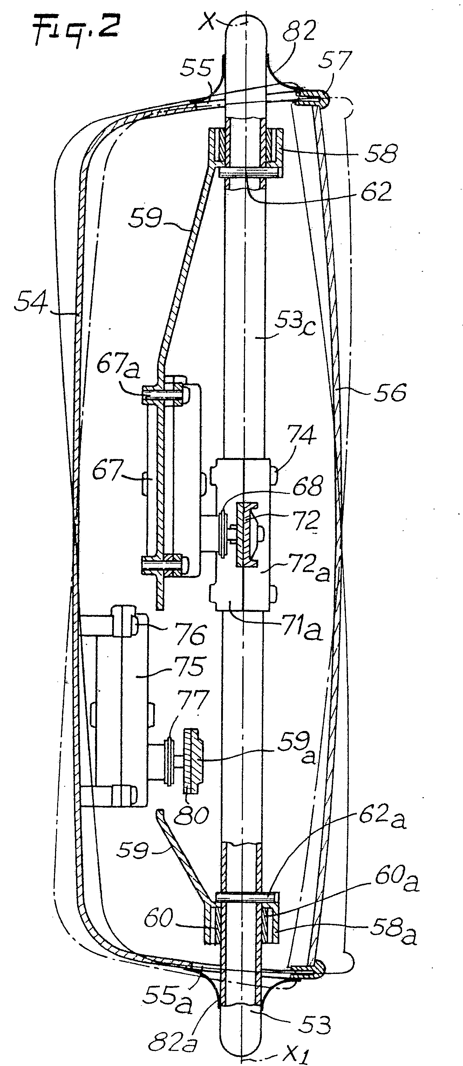

Le moyen de commande 75 (fig. 2, 4) comporte une tête mobile 77 coulissant axialement et présentant une rotule 78 munie de deux tétons 79, 79a, ladite rotule 78 étant engagée dans un logement ménagé entre la paroi 59a de l'entretoise et une plaque 80 fixée sur ladite paroi par des vis 81, le point d'appui de la rotule 78 étant décalé verticalement par rapport à l'axe YY$_1$ pour faire pivoter le boîtier autour de l'axe horizontal YY$_1$ et donc par rapport à l'entretoise 59.

Le dispositif représenté aux fig. 1 à 5 fonctionne de la manière suivante:

En actionnant le moyen de commande 67, la tête 68 se déplace en translation axiale et provoque la rotation de l'entretoise 59 du fait que la rotule 69 est en appui décalé horizontalement par rapport au tube de support 53c. Il en résulte que l'entretoise 59, le boîtier 54 et le miroir 56, qui sont solidaires, pivotent autour de l'axe vertical XX$_1$, c'est-à-dire suivant un mouvement gauche-droite.

En actionnant le moyen de commande 75, la tête 77 se déplace en translation axiale et provoque la rotation du boîtier 54 du fait que la rotule 78 est en appui décalé verticalement sur l'entretoise 59. Il en résulte que le boîtier 54 et le miroir 56 pivotent autour de l'axe horizontal YY$_1$ c'est-à-

dire suivant un mouvement ciel-terre.

Aux fig. 7, 8, 9, on a représenté un mode de réalisation des moyens de commande de déplacement 67 et 75 qui comprennent chacun un carter 27 dans lequel est fixé un moteur électrique 28 dont l'arbre de sortie porte un pignon 29 qui engrène avec un pignon 30 calé sur un axe 31 monté rotatif dans le carter et qui est conformé pour constituer une vis sans fin 32 engrenant avec une roue tangente 33 qui est solidaire en rotation d'une tige 34 à filet hélicoïdal ou tige filetée dans laquelle est engagée la partie médiane de deux étriers élastiques 35, 35a solidaires d'un fourreau 36 disposé autour de la tige 34 et dont la tête 17 porte une rotule 18 munie de tétons 19, 19a.

Le dispositif fonctionne de la manière suivante: lorsqu'on alimente le moteur 28, on entraîne en rotation, par les pignons 29, 30, la vis 32 et la roue tangente 33, la tige 34 par son filet hélicoïdal ou tige filetée, entraînant en translation les étriers 35, 35a et le fourreau 36.

Bien que l'on ait décrit et représenté des moyens de commande utilisant des moteurs électriques, il est bien évident que le déplacement des organes du rétroviseur peut être obtenu par tout autre moyen mécanique et notamment par un câble qui est actionné de l'intérieur du véhicule par un organe de commande manuelle.

## Revendications

1. Dispositif de commande à distance d'un miroir de rétroviseur pour véhicule fixé sur un boîtier (54) renfermant un mécanisme de commande, comprenant un organe de support (53) solidaire de la carrosserie du véhicule et s'étendant à l'intérieur du boîtier par au moins une ouverture (55), ledit organe présentant un premier axe (XX$_1$) autour duquel est montée pivotante une entretoise (59) sur laquelle est monté pivotant suivant un deuxième axe (YY$_1$) perpendiculaire au premier axe (XX$_1$) le boîtier (54) portant le miroir (56) un moyen de commande (67) de déplacement autour de l'axe XX$_1$ au voisignage du second axe (YY$_1$) étant prévu entre l'organe de support (53) et l'entretoise (59) et un autre moyen de commande (75) de déplacement autour de l'axe (YY$_1$) étant disposé de façon décalée par rapport au second axe (YY$_1$) entre l'entretoise (59) et le boîtier (54), caractérisé en ce que l'organe de support est constitué d'une barre (53) ou d'un tube en forme de U fixé à ses deux extrémités (53a, 53b) sur la carrosserie du véhicule et dont la partie centrale (53c) qui s'étend à l'intérieur du boîtier (54) à travers deux ouvertures (55, 55a), ménagées dans celui-ci constitue l'axe vertical (XX$_1$) autour duquel est montée pivotante, au moyen de deux demi-colliers (58, 58a), l'entretoise (59) portant le boîtier (54), lesdits demi-colliers (58, 58a), présentant chacun une lumière (61, 61a) dans laquelle est engagée l'extrémité d'une goupille (62, 62a) solidaire de la partie centrale (53c) de la barre ou du tube, ladite entretoise (59) compor tant en outre deux tourillons (63, 63a) disposés suivant l'axe horizontal (YY₁) et engagés dans des paliers (64, 64a) prévus sur le boîtier (54).

2. Dispositif suivant la revendication 1, caractérisé en ce que les paliers prévus sur le boîtier (54) sont constitués chacun par un logement (64) ouvert d'un côté et dans lequel est maintenu un tourillon (63) de l'entretoise (59) sous l'action d'une lame élastique (65) dont les deux extrémités sont en appui contre deux organes de support (66, 66a) solidaires du boîtier (54).

3. Dispositif suivant la revendication 1, caractérisé en ce que les moyens de commande (16, 22, 67, 75) de déplacement sont constitués chacun d'un carter (27) fixé sur l'entretoise (59) ou sur le boîtier (54) et dans lequel est disposé un moteur électrique (28) entraînant en rotation par un moyen de transmission (30, 31, 32, 33) une tige (34), à filet hélicoïdal dans lequel est engagée la partie médiane d'au moins un étrier élastique (35, 35a) qui est solidaire d'un fourreau (36) disposé autour de la tige et dont une extrémité est montée de façon articulée au moyen d'une rotule (18, 69, 78) sur l'organe de support (53) ou sur l'entretoise (59).

4. Dispositif suivant la revendication 1, caractérisé en ce que les moyens de commande de déplacement des organes sont actionnés chacun à partir d'un câble de commande dont l'une des extrémités est reliée au boîtier (54) ou à l'entretoise (59) et dont l'autre extrémité est reliée à un organe de manoeuvre manuel disposé dans le véhicule.

## Patentansprüche

1. Vorrichtung zur Fernsteuerung eines Rückspiegels für Kraftfahrzeuge, der an einem einen Steuermechanismus umschließenden Gehäuse (54) befestigt ist,

— mit einem Tragorgan (53), das mit dem Aufbau des Fahrzeugs verbunden ist und sich durch wenigstens eine Öffnung (55) in den Innenraum des Gehäuses erstreckt,

— wobei das Tragorgan eine erste Achse (XX₁) aufweist, an der ein Zwischenträger (59) angelenkt ist, an den längs einer zur ersten Achse (XX₁) senkrechten Achse (YY₁) das den Spiegel (56) tragende Gehäuse (54) angelenkt ist,

— wobei zwischen dem Tragorgan (53) und dem Zwischenträger (59) eine Steuereinrichtung (67) für die Verstellung um die Achse (XX₁) in der Nähe der zweiten Achse (YY₁) vorgesehen ist und

— wobei zwischen dem Zwischenträger (59) und dem Gehäuse (54) eine weitere Steuereinrichtung (75) für die Verstellung um die Achse (YY₁) versetzt gegenüber der zweiten Achse (YY₁) angeordnet ist,

dadurch gekennzeichnet,

— daß das Tragorgan aus einem U-förmigen Stab (53) oder Rohr besteht, das an seinen beiden Enden (53a, 53b) am Aufbau des Fahrzeugs befestigt ist und dessen Mittelteil (53c), das sich im Gehäuse (54) durch zwei darin ausgebildete Öffnungen (55, 55a) erstreckt, die senkrechte Achse (XX₁) bildet, an der mittels zweier halber Flanschringe (58, 58a) der das Gehäuse (54) tragende Zwischenträger (59) angelenkt ist,

— wobei die halben Flanschringe (58, 58a) jeweils eine Aussparung (61, 61a) aufweisen, in die das Ende eines Stifts (62, 62a) eingreift, der mit dem Mittelteil (53c) des Stabs oder Rohrs fest verbunden ist,

— wobei der Zwischenträger (59) ferner zwei Drehzapfen (63, 63a) aufweist, die längs der waagerechten Achse (YY₁) angeordnet sind und in am Gehäuse (4) vorgesehene Lager (64, 6a) eingreifen.

2. Vorrichtung nach Anspruch 1, dadurch gekennzeichnet, daß die am Gehäuse (54) vorgesehenen Lager jeweils aus einem einseitig offenen Sitz (64) bestehen, in dem ein Drehzapfen (63) des Zwischenträgers (59) unter der Wirkung eines elastischen Streifens (65) gehalten wird, dessen beide Enden an zwei mit dem Gehäuse (54) verbundenen Tragorganen (66, 6a) anliegen.

3. Vorrichtung nach Anspruch 1, dadurch gekennzeichnet, daß die Steuereinrichtungen (16, 22, 67, 75) für die Verstellung jeweils aus einem Kasten (27) bestehen, der am Zwischenträger (59) oder am Gehäuse (54) befestigt ist und in dem ein Elektromotor (28) angeordnet ist, der über ein Getriebe (30, 31, 32, 33) eine Stange (34) mit Schraubengewinde dreht, in das das Mittelteil wenigstens eines elastischen Bügels (35, 35a) eingreift, der mit einer Hülse (36) verbunden ist, die um die Stange herum angeordnet ist und deren eines Ende mittels eines Kugelzapfens (18, 69, 78) an Tragorgan (53) oder am Zwischenträger (59) angelenkt ist.

4. Vorrichtung nach Anspruch 1, dadurch gekennzeichnet, daß die Steuereinrichtungen für die Verstellung der Organe jeweils von einem Steuerseil betätigt werden, dessen eines Ende mit dem Gehäuse (54) oder dem Zwischenträger (59) und dessen anderes Ende mit einem im Fahrzeug angeordneten Handbetätigungsorgan verbunden sind.

## Claims

1. Device for the remote control of a rearview mirror for motor vehicle fixed on a case (54) which contains a control mechanism comprising a supporting member (53) integral with the vehicle body and extending inside the case through at least one opening (55) said member having a first axis (XX₁) around which a crosspiece (59) is pivotally mounted, on which crosspiece the case (54) holding the mirror (56) is pivotally mounted on a second axis (YY$_1$) perpendicular to the first axis (XX$_1$), means (67) of controlling the displacement around axis (XX$_1$) in the neighbourhood of second axis (YY$_1$) being provided between the supporting member (53) and the crosspiece (59) and another means (75) of controlling the displacement around axis (YY$_1$) being disposed in offset manner with respect to second axis (YY$_1$) between the crosspiece (59) and the case (54), characterized in that the supporting member is constituted by a bar (53) or a U-shaped tube fixed by its two ends (53a, 53b) on the vehicle body and whose central part (53c) which extends inside the case (54) through two openings (55, 55a) provided therein constitute main axis (XX$_1$) around which the crosspiece (59) holding the case (54) is pivotally mounted, by means of two half-clips (58—58a), each having an opening (61, 61a) in which is engaged the end of a pin (62, 62a) integral with the central part (53c) of the bar or tube, said crosspiece (59) further comprising two journals (63, 63a) disposed on horizontal axis (YY$_1$) and engaged in bearings (64, 64a) provided on the case (54).

2. Device according to claim 1, characterized in that the bearings provided on the case (54) are each constituted by a housing (64) open on one side and in which is maintained a journal (63) of the crosspiece (59) under the action of an elastic blade (65) whose two ends rest on two supporting members (66, 66a) integral with the case (54).

3. Device according to claim 1, characterized in that the means of controlling (16, 22, 67, 75) and of displacement are each constituted by a casing (27) fixed on the crosspiece (59) or on the case (54) and in which is disposed an electric engine (28) driving a rod (34) in rotation, by way of transmission means (30, 31, 32, 33), said rod having a helicoidal threading into which engages the middle part of at least one elastic clip (35, 35a) which is integral with a sleeve (36) placed around the rod and of which one end is hingedly mounted by means of a knuckle joint (18, 69, 78) on the supporting member (53) or on the crosspiece (59).

4. Device according to claim 1, characterized in that the means controlling the displacement of the members are each actuated from a control wire, one end of which is connected to the case (54) or to the crosspiece (59) and the other end is connected to manual-operating means placed in the vehicle.

Fig.1

0 064 422

Fig.2

Fig.3

Fig.4

Fig.5

Fig.6

66
65
64
66a
54

Fig.6a

66
65
66a
64
63
54

32
35
VIII
31
IX
30

19
18
33
19a

VIII
27
IX
29
28
35a

Fig.7

18
35
17
36
32
34
35a
27
33

Fig.8

29
31
27
30

Fig.9